# FASCICULE DE BREVET EUROPEEN

(11) **EP 3 491 396 B1**
(45) Date de publication et mention de la délivrance du brevet: **29.09.2021**
(21) Numéro de dépôt: 17758587.4
(22) Date de dépôt: 25.07.2017
(51) Int. Cl.: G01Q 60/32, G01N 29/06

(54) **DISPOSITIF D'ANALYSE VOLUMETRIQUE D'UN ECHANTILLON ORGANIQUE OU INORGANIQUE**
VORRICHTUNG ZUR VOLUMENANALYSE EINER ORGANISCHEN ODER ANORGANISCHEN PROBE
DEVICE FOR BULK ANALYSIS OF AN ORGANIC OR INORGANIC SAMPLE

(30) Priorité: 26.07.2016 FR 1657168
(43) Date de publication de la demande: 05.06.2019
(73) Titulaire: Université de Bourgogne, 21078 Dijon (FR)
(72) Inventeur: BOURILLOT, Eric, 21000 Dijon (FR); LESNIEWSKA, Eric, 21000 Dijon (FR); VITRY, Pauline, 89470Moneteau (FR)
(74) Mandataire: Merckling, Norbert
(86) Numéro de dépôt international: PCT/FR2017/052058
(87) Numéro de publication internationale: WO 2018/020133

(56) Documents cités:
- JP-A- H0 821 826
- JP-A- 2006 153 574
- US-A1- 2011 231 966
- VITRY PAULINE ET AL: "Combining infrared and mode synthesizing atomic force microscopy: Application to the study of lipid vesicles insideStreptomycesbacteria", NANO RESEARCH, TSINGHUA UNIVERSITY PRESS, CN, vol. 9, no. 6, 29 avril 2016 (2016-04-29), pages 1674-1681, XP035958826, ISSN: 1998-0124, DOI: 10.1007/S12274-016-1061-6 [extrait le 2016-04-29]

## Description

### Domaine technique

La présente invention se rapporte au domaine technique général de la microscopie à force atomique (appelée également AFM ou Atomic Force Microscopy). La microscopie à force atomique est connue en tant que telle sous diverses variantes, lesquelles ne seront par conséquent pas détaillées davantage dans la présente.

La présente invention concerne plus particulièrement un dispositif d'analyse acoustique dont la conception et le fonctionnement sont basés sur la microscopie à force atomique pour réaliser la caractérisation volumétrique d'échantillons organiques ou inorganiques.

La technologie de base de cette invention est tout particulièrement prometteuse pour les échantillons organiques et notamment pour toutes les applications en rapport avec la biologie - santé au niveau cellulaire, dans leur milieu physiologique.

Actuellement, le suivi intracellulaire utilise la détection par microscopie de fluorescence ou la microscopie confocale permettant de localiser les différents organismes incorporés dans une cellule ou une bactérie. Cependant, ces techniques ont des limites de résolution dues à la diffusion.

La présente invention trouve donc son application tout particulièrement dans tous les domaines où l'analyse et/ou la détection de défauts précoces dans la matière est nécessaire et cela de façon non destructive.

### Etat de la technique

On connaît par exemple par l'intermédiaire du document US 8,448,261, un dispositif de microscopie à force atomique (appelée aussi MS-AFM ou Mode Synthesizing Atomic Force Microscopy) qui décrit notamment l'utilisation de deux ondes ultrasonores appliquées au niveau d'une sonde de mesure d'une part et d'un échantillon d'autre part. Cette technologie connue n'est cependant pas indemne d'inconvénients majeurs. En effet, les sources d'excitation ultrasonore au niveau du levier (ou sonde) et de l'échantillon doivent être installées manuellement par chaque opérateur utilisant ce dispositif, pouvant conduire à une variabilité élevée du positionnement des sources d'excitation ultrasonore au niveau du levier et par conséquent, une variation importante au niveau des résultats mesurés.

Le fait d'ajouter un actionneur piézoélectrique au niveau du levier de mesure engendre un trajet plus long et décalé du faisceau de lumière émis par la diode laser après réflexion sur l'extrémité dudit levier par rapport au trajet initial. En effet, les supports de levier ainsi que les leviers sont conçus pour qu'après réflexion, le faisceau laser arrive généralement sur un miroir pour être envoyé sur une photodiode (photo-détecteur). Même si il existe un réglage angulaire au niveau du miroir afin d'ajuster la position du spot laser sur la photodiode, ce réglage est limité. Le fait de disposer un actionneur piézoélectrique au niveau du levier de mesure, lequel est ensuite positionné sur son support génère donc un décalage du trajet optique du faisceau laser réfléchi vers le bas du miroir. Il n'est généralement possible que de rattraper partiellement ce décalage en ramenant le spot sur la photodiode grâce à une inclination limitée du miroir. Cependant, il n'y a souvent qu'une seule partie de la puissance du spot laser qui est ramenée au niveau de la photodiode. Cela génère une perte de signal affectant la fiabilité des mesures et le réglage du dispositif n'est pas optimal. Il est souvent difficile, voire impossible, compte-tenu du l'ampleur du décalage observé, de centrer correctement ce spot laser.

En outre, lors de mesures en milieu liquide, ce phénomène est accentué par le phénomène de réfraction des rayons lumineux. Cette technologie n'est donc pas utilisable dans des milieux liquides.

Par ailleurs, ces dispositifs qui utilisent souvent une source d'excitation ultrasonore ou piézoélectrique disposée sous l'échantillon, empêchent d'effectuer une analyse spectrale complémentaire.

On connaît également, par exemple par l'intermédiaire du document US 2011/0231966, un dispositif de microscopie à force atomique (appelée aussi MS-AFM) qui utilise deux ondes ultrasonores appliquées, l'une au niveau d'une sonde de mesure et l'autre au niveau d'un échantillon. On retrouve par conséquent les inconvénients précités se rapportant à une telle configuration. Dans la configuration précitée, l'échantillon doit obligatoirement être déposé sur un support (par exemple une lame de verre ou métallique) afin de coller l'actionneur piézoélectrique sous la surface de l'échantillon. Ceci permet d'assurer une transmission satisfaisante des ondes ultrasonores. Cette opération nécessite l'utilisation d'une colle chauffée. Cela peut induire un échauffement de l'échantillon. Un tel échauffement peut s'avérer nuisible pour des échantillons biologiques.

L'utilisation d'une telle colle, par exemple même pour un collage à froid, risque d'altérer l'échantillon du fait de la présence de composés nocifs tels que des solvants.

En outre, de manière particulièrement désavantageuse, les actionneurs piézo-électriques de ce dispositif ne sont pas découplés du levier de mesure.

On connaît également le dispositif de mesure acoustique basé sur la microscopie à force atomique décrit dans le document JP H08 21826 A.

Ce dispositif comprend classiquement un levier en porte-à-faux dont l'extrémité comporte une pointe de mesure destinée à interagir avec la surface de l'échantillon et dont les oscillations verticales sont analysées au moyen d'un dispositif laser ou d'un élément piézo-électrique situé sur la pointe du levier.

Dans ce dispositif connu, l'échantillon est placé sur la face supérieure d'un support parallélépipédique classique.

Pendant l'analyse, des ondes de surface de type ondes de Rayleigh sont générées à la surface de l'échantillon au moyen de deux transducteurs qui sont montés chacun sur un support en résine acrylique, placé à la surface de l'échantillon.

Pour pouvoir générer de telles ondes de surfaces, les transducteurs de ce dispositif doivent donc obligatoirement être placés à la surface de l'échantillon. Ils ne peuvent donc pas être déplacé contre le support de l'échantillon, et encore moins contre une face de ce support éloignée de l'échantillon.

P. Vitry et al., "Combining infrared and mode synthesizing atomic force microscopy: Application to the study of lipid vesicles inside Streptomyces bacteria", Nano Research, vol. 9 (2016), no. 6, pages 1674-1681 décrit un dispositif d'analyse acoustique par microscopie à force atomique d'un échantillon biologique.

JP 2006 153574 décrit un microscope à force atomique où le levier est excité par application à distance d'une vibration.

### Divulgation de l'invention

L'objet de la présente invention vise par conséquent à pallier les inconvénients de l'art antérieur en fournissant un nouveau dispositif d'analyse acoustique permettant de faire une analyse non destructive en volume d'un échantillon organique ou inorganique et ce à une échelle nanométrique.

Un autre objet de la présente invention vise à proposer un nouveau dispositif d'analyse acoustique pour la caractérisation volumétrique d'un échantillon, dont les performances sont améliorées par rapport aux dispositifs connus.

Un autre objet de la présente invention vise à proposer un nouveau dispositif d'analyse acoustique pour la caractérisation volumétrique d'un échantillon, dont l'utilisation et la mise au point sont particulièrement simples et fiables.

Un autre objet de la présente invention vise à proposer un nouveau dispositif d'analyse acoustique particulièrement avantageux, dans lequel les actionneurs piézo-électriques sont découplés du levier de mesure.

Les objets assignés à l'invention sont atteints à l'aide d'un dispositif d'analyse acoustique basée sur la microcopie à force atomique pour analyser en volume un échantillon organique ou inorganique selon la revendication 1, comportant :
- un support sur lequel est immobilisé l'échantillon,
- un levier de mesure de microscopie à force atomique, présentant une extrémité libre pourvue d'une pointe destinée à interagir avec une face supérieure de l'échantillon et à balayer ladite face supérieure,
- au moins deux des actionneurs piézoélectrique indépendants montés sur des supports mécaniques et fournissant des ondes ultrasonores générant un couplage interférentiel multimodal,
- des organes de mesure acoustique et d'analyse associés au levier de mesure, pour délivrer ses résultats liés à la caractérisation volumique de l'échantillon, comprenant une diode laser qui émet un rayon de lumière en direction du levier et un photo-détecteur qui reçoit ledit rayon de lumière après réflexion sur le levier, caractérisé en ce que :
- le support comporte un prisme à réflexion totale, comprenant une face sur laquelle est disposé l'échantillon et au moins une face opposée différente de la face sur laquelle est disposé l'échantillon contre laquelle sont appliqués les actionneurs piézoélectriques, et ce à des positions déterminées sur ledit prisme pour définir des angles d'excitation déterminés des ondes ultrasonores.

Par définition, un prisme à réflexion totale, dans la présente, est un prisme droit de 60° ou de 45° ou un prisme demi-sphérique ou demi-cylindrique.

L'angle d'excitation est défini comme étant l'angle entre les faces du prisme sur lesquelles sont fixés les actionneurs piézoélectriques et la face du prisme sur laquelle est fixé l'échantillon.

Selon un mode de réalisation préférentiel du dispositif selon l'invention, les actionneurs piézoélectriques sont positionnés de façon symétrique.

Selon un mode de réalisation du dispositif selon l'invention, la face sur laquelle est disposé l'échantillon est une face plane, préférentiellement horizontale, du prisme à réflexion totale.

Selon un mode de réalisation du dispositif selon l'invention, la face sur laquelle est disposé l'échantillon est la face supérieure du prisme à réflexion totale.

Selon un exemple de réalisation du dispositif conforme à l'invention, le prisme à réflexion totale est un prisme droit comprenant une face plane sur laquelle est disposé l'échantillon et deux faces opposées.

Les actionneurs piézoélectriques sont par exemple montés sur des supports mécaniques fixes et sont appliqués et immobilisés chacun contre l'une des deux faces opposées du prisme droit par l'intermédiaire d'une couche de gel ou de colle. Selon un autre exemple de réalisation du dispositif conforme à l'invention, le prisme à réflexion totale est un prisme demi-cylindrique comprenant une face plane sur laquelle est disposé l'échantillon et une face cylindrique contre laquelle sont appliqués les actionneurs piézoélectriques.

Les supports mécaniques sont par exemple des supports mécaniques mobiles, par exemple motorisés, permettant de déplacer les actionneurs piézoélectriques sur la face cylindrique et de modifier ainsi les angles d'excitation des ondes ultrasonores.

Selon un autre exemple de réalisation du dispositif conforme à l'invention, le prisme à réflexion totale est un prisme demi-sphérique comprenant une face plane sur laquelle est disposé l'échantillon et une surface sphérique contre laquelle sont appliqués les actionneurs piézoélectriques.

Les supports mécaniques sont par exemple des supports mécaniques mobiles, par exemple motorisés, permettant de déplacer les actionneurs piézoélectriques sur la surface sphérique et de modifier ainsi les angles d'excitation et/ou les directions de propagation des ondes ultrasonores. La direction de propagation correspond à un vecteur défini par la génératrice perpendiculaire à la face du prisme sur laquelle est collée l'actionneur piézoélectrique.

Selon un autre exemple de réalisation conforme à l'invention, le dispositif comprend une source de lumière additionnelle et des organes optiques associés pour diriger un faisceau de lumière sur la face supérieure de l'échantillon générant ainsi une excitation thermique.

Selon un autre exemple de réalisation conforme à l'invention, le dispositif comprend une autre source de lumière et des organes optiques associés pour diriger à travers le prisme, un faisceau de lumière sur la face inférieure de l'échantillon et après une réflexion interne totale dans l'échantillon, pour diriger ledit faisceau de lumière réfléchi vers un analyseur spectral précédé d'un filtre optique.

Selon un autre exemple de réalisation du dispositif conforme à l'invention, les actionneurs piézoélectriques et les supports mécaniques fixes présentent des ouvertures traversantes respectives alignées, lesquelles sont disposées sur le prisme de manière à délimiter le chemin optique du faisceau de lumière incident et réfléchi.

Selon un autre exemple de réalisation conforme à l'invention, le dispositif comporte quatre actionneurs piézoélectriques. Une telle configuration permet par exemple de déterminer l'impact directionnel des ondes ultrasonores selon la géométrie des objets étudiés (géométrie cubique, sphérique linéique etc....). Cette configuration permet également de déterminer, dans le cas d'échantillons cristallins, s'il existe des axes de symétrie, lesquels pourraient être révélés selon la direction de propagation des ondes ultrasonores. Cette configuration permet également de déterminer si une excitation simultanée des quatre actionneurs piézoélectriques, générant ainsi une onde dite sphérique, ne révèlerait pas d'autres détails de l'échantillon, comparativement à une excitation de l'échantillon par des ondes planaires.

Selon un autre exemple de réalisation du dispositif conforme à l'invention, le matériau constitutif du prisme est un matériau solide et organique. Dans le cas où le dispositif conforme à l'invention est conçu pour ajouter une excitation optique, selon la nature des longueurs d'ondes utilisées, la nature du matériau constitutif du prisme est importante. A titre d'exemple, dans le cas d'un rayonnement infra-rouge IR, il est nécessaire d'utiliser pour le prisme, un matériau n'absorbant pas le rayonnement infra-rouge IR. Or le verre est un matériau absorbant le rayonnement infra-rouge IR. Il est alors préférable d'utiliser le matériau ZnSe.

Selon un autre exemple, il est préférable d'utiliser un matériau en quartz pour le rayonnement ultra-violet UV.

Selon un exemple de réalisation conforme à l'invention, le levier de mesure est un levier optique associé à un filtre optique lequel est suivi d'un analyseur spectral additionnel.

Un avantage remarquable du dispositif conforme à l'invention est qu'il permet de faire une analyse volumétrique avec une résolution nanométrique sans préparation particulière de l'échantillon, hormis celle imposée par la microscopie à force atomique.

Un autre avantage du dispositif conforme à l'invention réside dans la possibilité de modifier la profondeur d'investigation dans un échantillon permettant ainsi d'effectuer une analyse volumétrique de l'échantillon tout en conservant la résolution et les performances du microscope à force atomique.

Un autre avantage du dispositif conforme à l'invention réside dans le fait que cette nouvelle configuration permet de travailler en milieu liquide contrairement à la technologie connue (MS-AFM ou Mode-Synthesizing Atomic Force Microscopy).

Un autre avantage du dispositif conforme à l'invention réside dans sa grande simplicité d'utilisation.

Un autre avantage du dispositif conforme à l'invention réside dans la possibilité d'effectuer des analyses nanométriques en volume d'un échantillon sans utiliser un marqueur.

En outre, grâce au dispositif conforme à l'invention, l'échantillon peut être déposé directement sur la face supérieure du prisme ou le support de l'échantillon peut être fixé sur la face supérieure du prisme au moyen d'un gel. Une telle opération n'induit aucun échauffement de l'échantillon.

Les performances du dispositif conforme à l'invention sont améliorées notamment grâce à une meilleure stabilité mécanique résultant du fait qu'il n'y plus d'actionneur piézoélectrique au niveau du levier.

Le dispositif conforme à l'invention permet également d'améliorer le rapport signal sur bruit résultant du fait que le faisceau laser peut être centré correctement sur un photo-détecteur quatre quadrants. Ainsi au niveau des réponses acoustiques, on observe moins d'effets « de bord » des ondes de par le positionnement symétrique des actionneurs piézoélectriques. A titre d'exemple, sur des figures réalisées sur le même type de bactérie, la paroi membranaire induit des échos de bord de membre donnant un contraste très marqué de la paroi par rapport à la vision interne des éléments de la bactérie. Ce contraste de la paroi membranaire est diminué avec le dispositif conforme à l'invention et permet d'obtenir une meilleure lisibilité des éléments internes de la bactérie.

### Brève description des figures

D'autres caractéristiques et avantages de l'invention apparaîtront à la lecture de la description détaillée qui va suivre, description faite en référence aux dessins annexés, dans lesquels :
- la figure 1 est une illustration schématique d'un exemple de réalisation d'un dispositif d'analyse acoustique conforme à l'invention ;
- la figure 2 est une illustration schématique d'un autre exemple de réalisation du dispositif d'analyse acoustique conforme à l'invention ;
- la figure 3 est une illustration schématique d'un autre mode de réalisation conforme à l'invention du dispositif d'analyse acoustique de la figure 1 ;
- la figure 4 est une illustration schématique d'un autre exemple de réalisation du dispositif d'analyse acoustique conforme à l'invention ;
- la figure 5 est une illustration schématique d'un autre mode de réalisation conforme à l'invention du dispositif d'analyse acoustique de la figure 2 ;
- la figure 6 est une illustration schématique d'un autre exemple de réalisation du dispositif d'analyse acoustique conforme à l'invention comportant un levier optique de mesure ; et
- la figure 7 est une illustration schématique d'un exemple supplémentaire de réalisation du dispositif d'analyse acoustique conforme à l'invention, comportant un levier optique de mesure.

### Exposé détaillé de l'invention

Dans la suite, les éléments structurellement et fonctionnellement identiques, présents sur différentes figures portent les mêmes références numériques ou alphanumériques.

En outre, les éléments techniques structurellement et fonctionnellement identiques, ne seront pas décrits en détails pour tous les modes de réalisation du dispositif conforme à l'invention. Le fonctionnement de ces éléments est aisément transposable dans le cadre de l'invention, d'un exemple de réalisation à un autre.

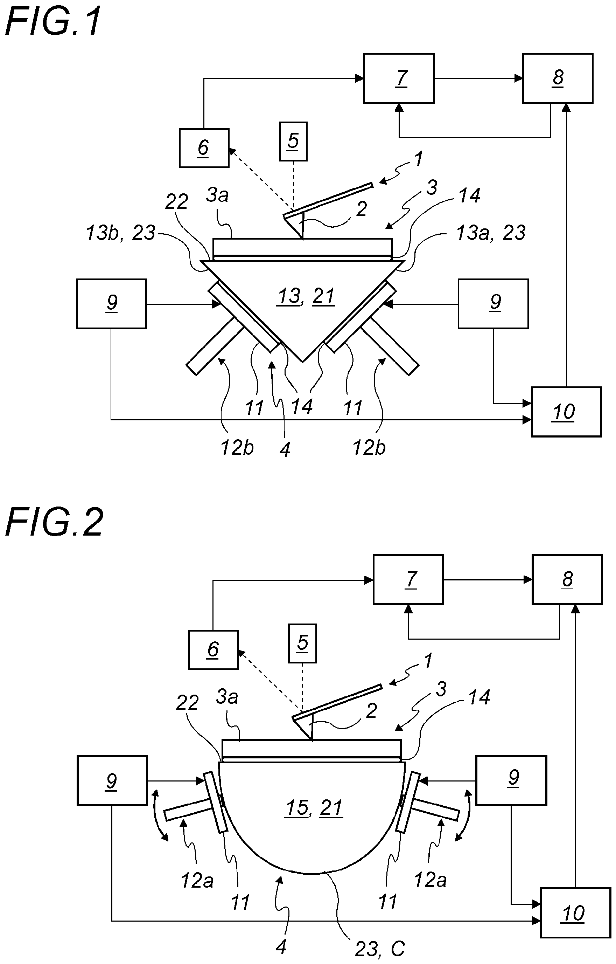

La figure 1 est une illustration schématique d'un premier exemple de réalisation d'un dispositif d'analyse acoustique conforme à l'invention.

Le dispositif comprend des moyens techniques issus de la microscopie à force atomique. Le dispositif conforme à l'invention comprend ainsi un levier 1 de mesure de microscopie à force atomique (appelé également levier AFM classique). Ce levier 1 présente une pointe 2 destinée à interagir avec un échantillon 3 au niveau de sa face supérieure 3a.

Le levier 1 et plus précisément la pointe 2 dudit levier 1, est donc destinée à s'approcher de la face supérieure 3a et à balayer cette dernière. A cet effet, le dispositif conforme à l'invention comprend des actionneurs mécaniques, non représentés, pour assurer avec précision, un déplacement relatif entre le levier 1 et un support 4 sur lequel est immobilisé l'échantillon 3.

Selon un exemple de réalisation préférentiel du dispositif conforme à l'invention, le levier 1 est mobile.

Selon un autre exemple de réalisation conforme à l'invention, lorsque dans le système AFM c'est l'échantillon 3 qui se déplace, on peut envisager que ce soit l'ensemble comprenant l'échantillon 3 et un prisme, supportant ledit échantillon 3 et comportant des actionneurs piézoélectriques, qui soit mobile.

Le dispositif conforme à l'invention comprend en outre, des organes de mesure acoustique et d'analyse associés au levier 1 de mesure. Ces organes de mesure et d'analyse comprennent de préférence et de manière connue, une diode laser 5 et un photo-détecteur 6. La diode laser 5 émet ainsi un rayon de lumière sur le levier 1, lequel réfléchit ledit rayon de lumière en direction du photo-détecteur 6. Ainsi, une variation de la position dans l'espace du levier 1 pourra être détectée sur le photo-détecteur 6 par une variation de position de l'impact du rayon de lumière réfléchi. Le rayon de lumière est préférentiellement un faisceau laser.

De préférence, le dispositif conforme à l'invention comprend également une unité de contrôle 7, un amplificateur 8, au moins deux générateurs de fonction 9 et un mélangeur de fréquence 10. Le fonctionnement de ces éléments sera rappelé plus loin.

Le dispositif conforme à l'invention comprend également au moins deux sources d'excitation ultrasonores constituées par des actionneurs piézoélectriques 11. Ces derniers sont montés chacun sur un support mécanique 12.

Le support 4 du dispositif selon l'invention comprend un prisme à réflexion totale 21 qui comporte une face 22 sur laquelle est disposé l'échantillon 3 et une ou deux faces opposées 23 qui sont différentes de la face 22 sur laquelle est disposé l'échantillon 3 et contre lesquelles sont appliqués les actionneurs piézoélectriques 11.

La face 22 sur laquelle est disposé l'échantillon 13 est une face sensiblement plane, préférentiellement horizontale, du prisme à réflexion totale 21. Il s'agit généralement de la face supérieure du prisme.

Selon sa nature, le prisme 21 comporte également une ou deux faces opposées 23, à savoir deux faces planes 13a et 13b dans le cas d'un prisme droit 13, une face cylindrique C dans le cas d'un prisme demi-cylindrique 15, ou une surface sphérique S dans le cas d'un prisme demi-sphérique 16.

Dans l'exemple de réalisation représenté sur la figure 1, le support 4 comporte un prisme droit 13 présentant deux faces opposées 13a et 13b comportant chacune un actionneur piézoélectrique 11. Chaque actionneur piézoélectrique 11 est avantageusement collé sur une face 13a, 13b, par l'intermédiaire d'une couche 14 d'un gel ou d'une colle. Une couche 14 complémentaire sert par exemple à immobiliser l'échantillon 3 sur la face supérieure 22 s'étendant sensiblement horizontalement.

Dans l'exemple de réalisation du dispositif conforme à l'invention, représenté à la figure 2, le support 4 comporte un prisme demi-cylindrique 15. L'échantillon 3 est immobilisé sur la face 22 supérieure plane du prisme demi-cylindrique 15.

Les actionneurs piézoélectriques 11 sont montés sur des supports mécaniques mobiles 12b, par exemple motorisés et disposés sensiblement en vis-à-vis et en contact sur la face cylindrique C du prisme demi-cylindrique 15.

Le déplacement des supports mécaniques mobiles 12b sur une surface cylindrique permet de modifier les angles d'excitation des ondes ultrasonores.

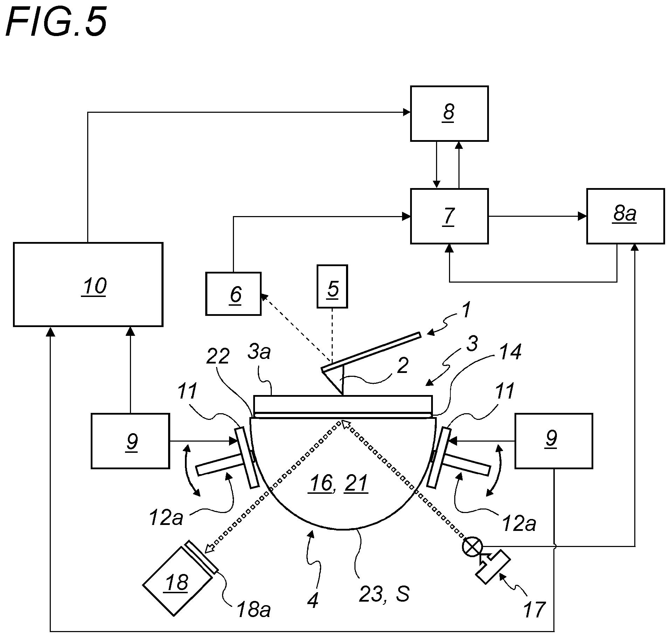

Dans l'exemple de réalisation du dispositif conforme à l'invention, représenté à la figure 5, le support 4 comporte un prisme demi-sphérique 16. Le déplacement des supports mécaniques mobiles 12b, sur une surface sphérique S, permet avantageusement de modifier les angles d'excitation et/ou les directions de propagation des ondes ultrasonores.

Le dispositif conforme à l'invention de la figure 5 comprend une source de lumière 17 et des organes optiques associés, connus, pour diriger un faisceau de lumière à travers le prisme 13, 15 ou 16, sur la face inférieure de l'échantillon 3. Après une réflexion interne totale dans l'échantillon 3, le faisceau réfléchi se dirige vers un analyseur spectral 18 précédé d'un filtre optique 18a. La source de lumière 17 est avantageusement reliée à un amplificateur complémentaire 8a du dispositif conforme à l'invention.

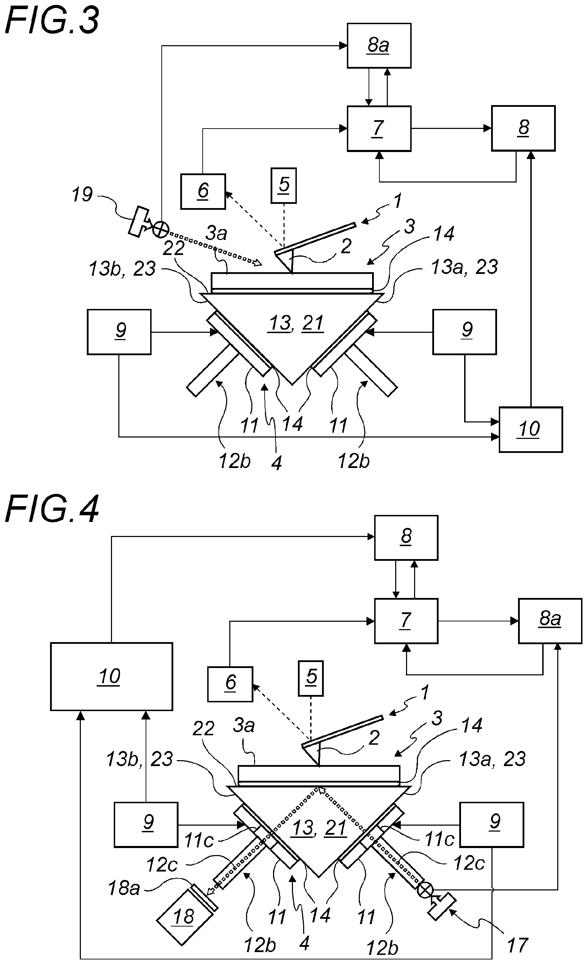

Dans l'exemple de réalisation du dispositif conforme à l'invention représenté à la figure 4, l'actionneur piézoélectrique 11 et le support mécanique fixe 12b associé présentent des ouvertures traversantes 11c, 12c respectives. Ces dernières sont alignées de manière à délimiter le chemin optique des faisceaux de lumière incident et réfléchi provenant de la source de lumière 17.

La source de lumière 17 ainsi que l'analyseur spectral 18 sont alors avantageusement montés sur les supports mécaniques fixes 12b.

Dans l'exemple de réalisation conforme à l'invention représenté à la figure 3, le dispositif d'analyse acoustique comprend une source de lumière additionnelle 19 infrarouge et des organes optiques associés connus, pour diriger un faisceau de lumière sur la face supérieure 3a de l'échantillon 3. Ce faisceau de lumière génère une excitation thermique dans l'échantillon 3. Cette excitation thermique va exciter de façon préférentielle certaine molécules en fonction de leurs capacités d'absorption spécifiques (caractéristiques liées à la nature des liaisons chimiques des molécules). Cette excitation thermique va alors être perçue par le levier 1 par différentes vibrations fréquentielles dudit levier 1 et enregistrée par le photo-détecteur 6. Ces vibrations correspondent alors à des longueurs d'onde spécifiques d'absorption dans l'infra-rouge lorsque le faisceau de lumière est une radiation infra-rouge. Ainsi, selon la nature des espèces chimiques que l'on souhaite caractériser, il suffit de sélectionner une seule longueur d'onde caractéristique d'un seul type de liaison chimique, pour obtenir une cartographie d'espèce chimique en plus de l'analyse volumétrique donnée par la microscopie acoustique.

Dans l'exemple de réalisation illustré à la figure 3, ainsi que dans les exemples de réalisation illustrés aux figures 4 et 5, les sources de lumière 19 et 17 sont reliées à l'amplificateur additionnel 8a, lequel est lui-même relié à l'unité de contrôle 7.

L'unité de contrôle 7 est l'unité de contrôle des AFM qui gère les signaux usuels d'un AFM. Elle permet également, généralement, d'avoir accès à des signaux extérieurs (entrée/sortie). Dans le cas de l'invention, elle permet d'acquérir les signaux extérieurs correspondant au signal de phase et d'amplitude du signal acoustique détecté par le levier 1 de mesure. Ces signaux (amplitude et phase) de l'onde acoustique sont détectés par le levier de mesure 1 et issus de l'excitation des actionneurs PZT placés sur les côtés du prisme 13, 15 ou 16.

Afin d'extraire cette information détectée par le levier de mesure 1, on utilise une détection synchrone par l'intermédiaire d'un amplificateur 8, relié directement au mélangeur de fréquence 10 dans lequel on injecte, comme signal de référence, la fréquence de l'onde acoustique recherchée.

Par ailleurs, le signal détecté par le levier 1 de mesure est enregistré via le photo-détecteur 6, grâce à la réflexion du faisceau laser sur le levier 1 en direction du photo-détecteur 6, comme pour tout AFM.

Ce signal est enregistré "électroniquement" par l'unité de contrôle 7 du microscope. Cette information est accessible comme signal extérieur à partir de l'unité de contrôle 7 et est donc envoyé comme signal d'entrée sur l'amplificateur 8 (détection synchrone). La détection extrait alors du signal d'entrée, le signal à la fréquence de référence et en donne l'amplitude et la phase lesquelles sont transmises à l'unité de contrôle 7 comme signaux externes à enregistrer. Ces signaux sont situés dans une gamme de tension électrique comprise entre +10V et - 10V.

Dans les exemples de réalisation du dispositif conforme à l'invention, illustrés aux des figures 3, 4 et 5, est ajoutée la possibilité que ledit dispositif puisse s'adapter sur des dispositifs possédant également en plus de l'AFM un système d'analyse optique. Ces systèmes d'analyse optique peuvent nécessiter l'utilisation d'un signal optique modulé (sources de lumière 19 ou 17 des figures) afin de limiter l'échauffement de l'échantillon 3 dû à la source de lumière. Ce signal optique étant modulé, il faut détecter ce signal à la fréquence de modulation via une détection synchrone par l'intermédiaire d'un amplificateur 8a.

Concernant l'analyse de ces signaux optiques, elle peut se faire en réflexion, soit en effectuant une analyse spectrale (avec un analyseur de spectre), soit en imageant le signal réfléchi par un détecteur de photon ou caméra CCD, afin de mesurer l'absorption par exemple.

De tels dispositifs optiques peuvent présenter diverses formes et utiliser des diverses sources ou divers détecteurs, selon les dispositifs optiques développés par les constructeurs de microscopes ou même développés par les utilisateurs. Le dispositif conforme à l'invention peut ainsi compléter une fonctionnalité de spectroscopie infra-rouge développée sur AFM.

Dans les modes de réalisation du dispositif conforme à l'invention illustrés aux figures 4 et 5, l'analyseur spectral 18, associé à son filtre optique 18a, peut être utilisé pour faire en plus de la microscopie à force atomique, une détection de fluorescence, une détection des plasmons de surface (SPR) ou de la spectroscopie Raman exaltée (SERS). L'analyseur spectral 18 est utilisé pour la détection optique en sortie de prisme par réflexion. Avantageusement, la lumière incidente est utilisée, à une fréquence donnée, pour une meilleure identification de la fréquence d'acquisition du signal optique.

Les dispositifs optiques utilisés servent généralement à faire de la détection ou de l'identification d'espèces chimiques/biologiques soit par la détection de marqueurs (fluorescence), soit de l'identification par des interactions spécifiques (SPR, SERS), soit par des absorptions spécifiques. Ces techniques sont généralement limitées en résolution spatiale (au mieux une centaine de nanomètres) et en analyse volumétrique. Le phénomène de diffusion permet de détecter la présence mais ne permet pas de localiser les espèces à l'intérieur d'un organe comme par exemple une cellule. Le dispositif conforme à l'invention permet donc de mieux localiser les espèces d'intérêt.

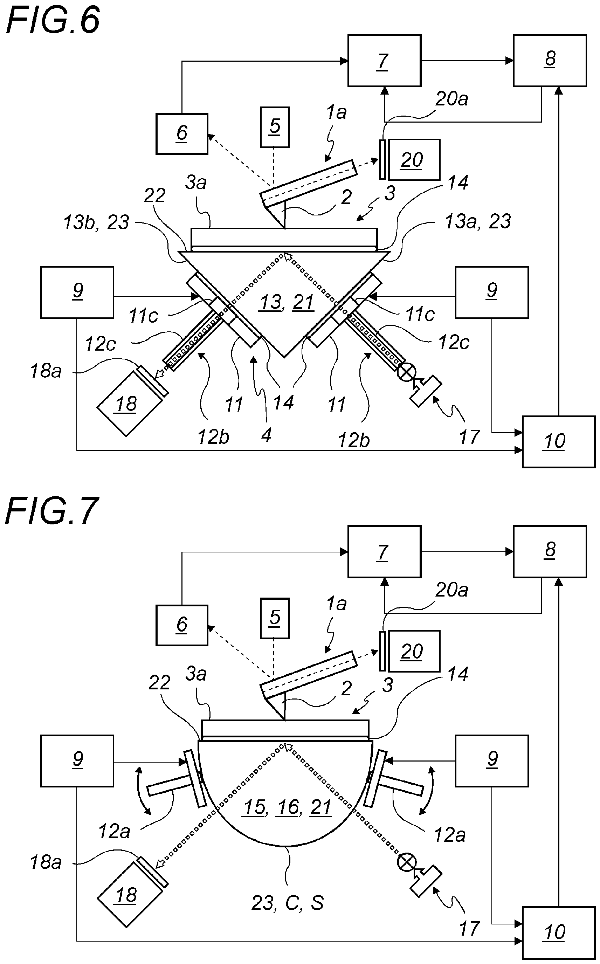

Dans l'exemple de réalisation du dispositif conforme à l'invention représenté à la figure 6, le levier 1 de mesure est remplacé par un levier optique la. Ce dernier transmet des signaux optiques provenant de l'échantillon 3 à un analyseur spectral complémentaire 20 précédé d'un filtre optique 20a.

Le dispositif conforme à l'invention illustré à la figure 7, se différencie des dispositifs des figures 2 et 5, par la présence du levier optique la, remplaçant le levier 1 de mesure. Ce levier optique la est aussi associé à un analyseur spectral complémentaire 20 précédé d'un filtre optique 20a.

L'intérêt de l'utilisation du levier optique la réside dans le fait qu'il permet de faire l'acquisition simultanée sur chaque point d'un même échantillon 3, du signal de topographie (comme le levier AFM classique), du signal acoustique en amplitude et en phase ainsi que du signal optique issu dudit échantillon 3 grâce à la source de lumière 17. Le levier optique la permet ainsi d'étendre la gamme de longueurs d'onde utilisable et détectable. On peut ainsi avec un tel levier optique la, détecter des longueurs d'onde allant du proche infrarouge IR au visible et le cas échéant jusqu'au proche ultraviolet UV, tandis que l'exemple de réalisation illustré par exemple à la figure 3 ne fonctionne que dans l'infrarouge IR.

Le dispositif conforme à l'invention est remarquable dans la mesure où il permet d'obtenir une meilleure précision que celle obtenue dans une configuration MS-AFM connue.

En effet, cela est confirmé par la comparaison des résultats obtenus avec des échantillons de polymères calibrés dont la structure a été modifiée localement par un faisceau d'électrons. Le dispositif conforme à l'invention a notamment permis d'établir une cartographie de changement volumétrique de la masse volumique des échantillons et ce de manière précise et fiable.

De manière évidente, l'invention ne se limite pas aux modes de réalisation préférentiels décrits précédemment et représentés sur les différentes figures, l'homme du métier pouvant y apporter de nombreuses modifications et imaginer d'autres variantes dans la limite des revendications annexées. L'invention est définie par les revendications.

## Revendications

1. Dispositif d'analyse acoustique basée sur la microcopie à force atomique pour analyser en volume un échantillon (3) organique ou inorganique comportant :
- un support (4) sur lequel est immobilisé l'échantillon (3),
- un levier (1, 1a) de mesure de microscopie à force atomique, présentant une extrémité libre pourvue d'une pointe (2) destinée à interagir avec une face supérieure (3a) de l'échantillon (3) et à balayer ladite face supérieure (3a),
- au moins deux des actionneurs piézoélectrique (11) indépendants montés sur des supports mécaniques et fournissant des ondes ultrasonores générant un couplage interférentiel multimodal,
- des organes de mesure acoustique et d'analyse associés au levier de mesure (1, 1a), pour délivrer ses résultats liés à la caractérisation volumique de l'échantillon (3), comprenant une diode laser (5) qui émet un rayon de lumière en direction du levier (1, 1a) et un photo-détecteur (6) qui reçoit ledit rayon de lumière après réflexion sur le levier (1, 1a),
où :
- le support (4) comporte un prisme à réflexion totale (21), comprenant une face (22) sur laquelle est disposé l'échantillon (3) et au moins une face opposée (23), différente de la face (22) sur laquelle est disposé l'échantillon, contre laquelle sont appliqués les actionneurs piézoélectriques (11), et ce à des positions déterminées sur ledit prisme (21) pour définir des angles d'excitations déterminés des ondes ultrasonores, lesdits angles d'excitation étant les angles entre la au moins une face (23) du prisme sur laquelle sont fixés les actionneurs piézoélectriques (11) et la face (22) du prisme sur laquelle est fixé l'échantillon (3).

2. Dispositif selon la revendication 1, **caractérisé en ce que** les actionneurs piézoélectriques (11) sont positionnés de façon symétrique.

3. Dispositif selon la revendication 1 ou la revendication 2, **caractérisé en ce que** la face (22) sur laquelle est disposé l'échantillon (3) est une face plane, préférentiellement horizontale, du prisme à réflexion totale (21).

4. Dispositif selon l'une quelconque des revendications précédentes, **caractérisé en ce que** la face (22) sur laquelle est disposé l'échantillon (3) est la face supérieure du prisme à réflexion totale (21).

5. Dispositif selon l'une quelconque des revendications précédentes, **caractérisé en ce que** le prisme à réflexion totale (21) est un prisme droit (13) comprenant une face (22) plane sur laquelle est disposé l'échantillon (3) et deux faces opposées (13a, 13b) ; et **en ce que** les actionneurs piézoélectriques (11) sont montés sur des supports mécaniques fixes (12b) et sont appliqués et immobilisés chacun contre l'une des deux faces opposées (13a, 13 b) du prisme droit (13) par l'intermédiaire d'une couche (14) de gel ou de colle.

6. Dispositif selon l'une quelconque des revendications 1 à 4, **caractérisé en ce que** le prisme à réflexion totale (21) est un prisme demi-cylindrique (15) comprenant une face (22) plane sur laquelle est disposé l'échantillon (3) et une face cylindrique (C) contre laquelle sont appliqués les actionneurs piézoélectriques (11), et **en ce que** les supports mécaniques sont des supports mobiles (12a) permettant de déplacer les actionneurs piézoélectriques (11) sur la face cylindrique (C) et de modifier ainsi les angles d'excitation des ondes ultrasonores.

7. Dispositif selon l'une quelconque des revendications 1 à 4, **caractérisé en ce que** le prisme à réflexion totale (21) est un prisme demi-sphérique (16) comprenant une face (22) plane sur laquelle est disposé l'échantillon (3) et une surface sphérique (S) contre laquelle sont appliqués les actionneurs piézoélectriques (11), et **en ce que** les supports mécaniques sont des supports mobiles (12a) permettant de déplacer les actionneurs piézoélectriques (11) sur la surface sphérique (S) et de modifier ainsi les angles d'excitation et/ou les directions de propagation des ondes ultrasonores.

8. Dispositif selon l'une quelconque des revendications 1 à 7, **caractérisé en ce qu'**il comprend une source de lumière (17) et des organes optiques associés pour diriger à travers le prisme (21), un faisceau de lumière sur la face inférieure de l'échantillon (3) et après une réflexion interne totale dans l'échantillon (3), pour diriger ledit faisceau de lumière réfléchi vers un analyseur spectral (18) précédé d'un filtre optique (18a).

9. Dispositif selon les revendications 8 et 5, **caractérisé en ce que** les actionneurs piézoélectriques (11) et les supports mécaniques fixes (12b) présentent des ouvertures traversantes respectives (11c et 12c) alignées, lesquelles sont positionnées sur le prisme droit (13) de manière à délimiter le chemin optique du faisceau de lumière incident et réfléchi.

10. Dispositif selon l'une quelconque des revendications 1 à 9, **caractérisé en ce qu'**il comprend une source de lumière additionnelle (19) et des organes optiques associés pour diriger un faisceau de lumière sur la face supérieure (3a) de l'échantillon (3) et générer ainsi une excitation thermique.

11. Dispositif selon l'une quelconque des revendications 1 à 10, **caractérisé en ce qu'**il comporte quatre actionneurs piézoélectriques (11).

12. Dispositif selon l'une quelconque des revendications 1 à 11, **caractérisé en ce que** le matériau constitutif du prisme (21) est un matériau solide et organique.

13. Dispositif selon l'une quelconque des revendications 1 à 12, **caractérisé en ce que** le levier (1) de mesure est un levier optique (1a) associé à un filtre optique (20a) suivi d'un analyseur spectral additionnel (20).

## Patentansprüche

1. Vorrichtung zur akustischen Analyse auf Basis der Rasterkraft- Mikroskopie zur Volumenanalyse einer organischen oder anorganischen Probe (3), die enthält:
- einen Träger (4), auf dem die Probe (3) immobilisiert wird,
- einen Messhebel (1, 1a) des Rasterkraft- Mikroskops, mit einem freien Ende, versehen mit einer Spitze (2), dazu bestimmt, mit einer Oberseite (3a) der Probe (3) zu interagieren und diese Oberseite (3a) abzutasten,
- mindestens zwei unabhängige piezoelektrische Stellglieder (11), montiert auf mechanischen Haltern, die Ultraschallwellen liefern, die eine multimodale Interferenzkopplung erzeugen,
- akustische Mess- und Analyseorgane, verbunden mit dem Messhebel (1, 1a), zur Lieferung der Ergebnisse in Verbindung mit der Volumencharakterisierung der Probe (3), mit einer Laserdiode (5), die einen Lichtstrahl in Richtung des Hebels (1, 1a) sendet und einen Photodetektor (6), der diesen Lichtstrahl nach Reflektion auf dem Hebel (1, 1a) empfängt,
worin
- der Halter (4) ein Totalreflektionsprisma (21) enthält, mit einer Fläche (22) auf der die Probe (3) angeordnet wird und mindestens einer gegenüberliegenden Fläche (23), die sich von der Fläche (22), auf der die Probe angeordnet ist, unterscheidet, gegen die die piezoelektrischen Stellglieder (11) angebracht sind, und zwar an Positionen, die an diesem Prisma (21) bestimmt sind, um bestimmte Erregungswinkel der Ultraschallwellen zu definieren, bei diesen Erregungswinkeln handelt es sich um Winkel zwischen mindestens der Fläche (23) des Prismas, auf der die piezoelektrischen Stellglieder (11) befestigt sind und der Fläche (22) des Prismas, auf der die Probe (3) befestigt ist.

2. Vorrichtung nach Anspruch 1, **dadurch gekennzeichnet, dass** die piezoelektrischen Stellglieder (11) symmetrisch angeordnet sind.

3. Vorrichtung nach Anspruch 1 oder Anspruch 2, **dadurch gekennzeichnet, dass** die Fläche (22) auf der die Probe (3) angeordnet ist, eine ebene, vorzugsweise horizontale Fläche des Totalreflektionsprismas (21) ist.

4. Vorrichtung gemäß irgendeinem der vorhergehenden Ansprüche, **dadurch gekennzeichnet, dass** die Fläche (22) auf der die Probe (3) angeordnet ist, die Oberseite des Totalreflektionsprismas (21) darstellt.

5. Vorrichtung gemäß irgendeinem der vorhergehenden Ansprüche, **dadurch gekennzeichnet, dass** es sich beim Totalreflektionsprisma (21) um ein gerades Prisma (13) handelt, mit einer ebenen Fläche (22), auf der die Probe (3) angeordnet ist und zwei entgegengesetzten Flächen (13a, 13b); und dadurch, dass die piezoelektrischen Stellglieder (11) auf festen mechanischen Trägern (12b) montiert sind und über eine Gel- oder Kleberschicht (14) gegen jeweils eine der beiden entgegengesetzten Flächen (13a, 13 b) des geraden Prismas (13) angebracht und immobilisiert sind.

6. Vorrichtung gemäß irgendeinem der vorhergehenden Ansprüche 1 bis 4, **dadurch gekennzeichnet, dass** das Totalreflektionsprisma (21) ein halbzylindrisches Prisma (15) ist, mit einer ebenen Fläche (22) auf der die Probe (3) aufgebracht wird und einer zylindrischen Fläche (C), gegen die die piezoelektrischen Stellglieder (11) angeordnet sind, und dadurch, dass die mechanischen Träger mobile Träger (12a) sind, mit denen die piezoelektrischen Stellglieder (11) auf der zylindrischen Fläche (C) verschoben werden können, um so die Erregungswinkeln der Ultraschallwellen zu ändern.

7. Vorrichtung gemäß irgendeinem der vorhergehenden Ansprüche 1 bis 4, **dadurch gekennzeichnet, dass** das Totalreflektionsprisma (21) ein halbkugelförmiges Prisma (16) ist, mit einer ebenen Fläche (22) auf der die Probe (3) aufgebracht wird und einer kugelförmigen Fläche (S), gegen die die piezoelektrischen Stellglieder (11) angeordnet sind, und dadurch, dass die mechanischen Träger mobile Träger (12a) sind, mit denen die piezoelektrischen Stellglieder (11) auf der kugelförmigen Fläche (S) verschoben werden können, um so die Erregungswinkeln der Ultraschallwellen zu ändern.

8. Vorrichtung gemäß irgendeinem der vorhergehenden Ansprüche 1 bis 7, **dadurch gekennzeichnet, dass** sie eine Lichtquelle (17) und verbundene optische Organe enthält, um durch das Prisma (21), einen Lichtstrahl auf die untere Fläche der Probe (3) zu senden und nach einer totalen internen Reflektion in die Probe (3) diesen reflektierten Lichtstrahl zu einem Spektralanalysator (18) zu senden, dem ein optischer Filter (18a) vorangeht.

9. Vorrichtung gemäß irgendeinem der vorhergehenden Ansprüche 8 und 5, **dadurch gekennzeichnet, dass** die piezoelektrischen Stellglieder (11) und die festen mechanischen Träger (12b) jeweils aneinander ausgerichtete durchführende Öffnungen (11c und 12c) aufweisen, die auf dem rechten Prisma (13) so positioniert sind, dass sie den optischen Pfad des einfallenden und reflektierten Lichtstrahls begrenzen.

10. Vorrichtung gemäß irgendeinem der vorhergehenden Ansprüche 1 bis 9, **dadurch gekennzeichnet, dass** sie eine zusätzliche Lichtquelle (19) enthält, und damit verbundene optische Organe, um einen Lichtstrahl auf die Oberseite (3a) der Probe (3) zu lenken und so eine thermische Erregung zu erzeugen.

11. Vorrichtung gemäß irgendeinem der vorhergehenden Ansprüche 1 bis 10, **dadurch gekennzeichnet, dass** sie vier piezoelektrische Stellglieder (11) enthält.

12. Vorrichtung gemäß irgendeinem der vorhergehenden Ansprüche 1 bis 11, **dadurch gekennzeichnet, dass** das Material, aus dem das Prisma (21) besteht, ein festes und organisches Material ist.

13. Vorrichtung gemäß irgendeinem der vorhergehenden Ansprüche 1 bis 12, **dadurch gekennzeichnet, dass** der Messhebel (1) ein optischer Hebel (1a) ist, verbunden mit einem optischen Filter (20a), gefolgt von einem zusätzlichen Spektralanalysator (20).

## Claims

1. An acoustic analysis device based on atomic force microscopy for the volume analysis of an organic or inorganic sample (3) comprising:
- a support (4) on which the sample (3) is immobilized,
- an atomic force microscopy measurement lever (1, 1a) having a free end provided with a point (2) intended to interact with an upper face (3a) of the sample (3) and scan said upper face (3a),
- at least two independent piezoelectric actuators (11) mounted on mechanical supports and furnishing ultrasound waves generating multimodal interference coupling,
- acoustic measurement and analysis members associated with the measurement lever (1, 1a), to deliver results related to the volume characterization of the sample (3), comprising a laser diode (5) that emits a light ray towards the lever (1, 1a) and a photodetector (6) that receives said light ray after reflection on the lever (1, 1a),
wherein:
- the support (4) comprises a total-reflection prism (21), comprising one face (22) on which the sample (3) is disposed and at least one opposite face (23), different from the face (22) on which the sample is disposed, against which the piezoelectric actuators (11) are applied and does so at preset positions on said prism (21) to define set angles of excitation of ultrasound waves, said angles of excitation being the angles between the at least one face (23) of the prism on which the piezoelectric actuators (11) are affixed and the face (22) of the prism on which the sample (3) is affixed.

2. The device according to claim 1, **characterized in that** the piezoelectric actuators (11) are positioned symmetrically.

3. The device according to claim 1 or claim 2, **characterized in that** the face (22) on which the sample (3) is disposed is a flat, preferably horizontal, face of the total-reflection prism (21).

4. The device according to any one of the preceding claims, **characterized in that** the face (22) on which the sample (3) is disposed is the upper face of the total-reflection prism (21).

5. The device according to any one of the preceding claims, **characterized in that** the total-reflection prism (21) is a straight prism (13) comprising a flat face (22) on which the sample (3) is disposed and two opposite faces (13a, 13b); and **in that** the piezoelectric actuators (11) are mounted on fixed mechanical supports (12b) and are each applied and immobilized against one of the two opposite faces (13a, 13b) of the straight prism (13) by means of a layer (14) of gel or adhesive.

6. The device according to any one of claims 1 to 4, **characterized in that** the total-reflection prism (21) is a semi-cylindrical prism (15) comprising a flat face (22) on which the sample (3) is disposed and a cylindrical face (C) against which the piezoelectric actuators (11) are applied, and **in that** the mechanical supports are mobile supports (12a) enabling the piezoelectric actuators (11) to move on the cylindrical face (C) and thus to modify the angles of excitation of the ultrasound waves.

7. The device according to any one of claims 1 to 4, **characterized in that** the total-reflection prism (21) is a semi-spherical prism (16) comprising a flat face (22) on which the sample (3) is disposed and a spherical face (S) against which the piezoelectric actuators (11) are applied, and **in that** the mechanical supports are mobile supports (12a) enabling the piezoelectric actuators (11) to move on the spherical surface (S) and thus to modify the angles of excitation and/or the directions of propagation of the ultrasound waves.

8. The device according to any one of claims 1 to 7, **characterized in that** it comprises a light source (17) and associated optical members for directing a light beam through the prism (21) onto the lower face of the sample (3) and then a total internal reflection in the sample (3), in order to direct said reflected light beam towards a spectrum analyzer (18) preceded by an optical filter (18a).

9. The device according to claims 8 and 5, **characterized in that** the piezoelectric actuators (11) and the fixed mechanical supports (12b) have respective aligned through-openings (11c and 12c), which are disposed on the straight prism (13) in such a way as to define the optical path of the incident and reflected light beam.

10. The device according to any one of claims 1 to 9, **characterized in that** it comprises an additional light source (19) and associated optical members in order to direct a light beam onto the upper face (3a) of the sample (3) thus generating a thermal excitation.

11. The device according to any one of claims 1 to 10, **characterized in that** it comprises four piezoelectric actuators (11).

12. The device according to any one of claims 1 to 11, **characterized in that** the constituent material of the prism (21) is a solid, organic material.

13. The device according to any one of claims 1 to 12, **characterized in that** the measurement lever (1) is an optical lever (1a) associated with an optical filter (20a), followed by an additional spectrum analyzer (20).
